# EUROPEAN PATENT SPECIFICATION

(11) **EP 3 946 798 B1**
(45) Date of publication and mention of the grant of the patent: **07.06.2023**
(21) Application number: 20721307.5
(22) Date of filing: 06.04.2020
(51) Int. Cl.: B23K 26/00, B23K 26/03, B23K 26/352, B23K 26/362, B23K 26/40

(54) **MARKING PROCESS OF AN OBJECT AND RELATED MARKING APPARATUS**
MARKIERUNGSVERFAHREN EINES OBJEKTS UND ZUGEHÖRIGE MARKIERUNGSVORRICHTUNG
PROCÉDÉ DE MARQUAGE D'UN OBJET ET APPAREIL DE MARQUAGE ASSOCIÉ

(30) Priority: 05.04.2019 IT 201900005174
(43) Date of publication of application: 09.02.2022
(73) Proprietor: Automator Marking Systems S.r.l., 20123 Milano (MI) (IT)
(72) Inventor: BARCILON BRAMBILLA, Jaime Alberto, 20144 Milano (IT)
(74) Representative: Brunacci, Marco
(86) International application number: PCT/IB2020/053269
(87) International publication number: WO 2020/202124

(56) References cited:
- JP-A- H01 306 083
- US-A- 6 066 829
- US-A1- 2017 115 656

## Description

### Technical Field

The present invention relates to a marking process of an object, in particular a marking and positioning process of an object to be marked, and to an apparatus to make this process, according to the preamble of claims 1 and 4 (see for example US 6 066 829 A).

### Background Art

Marking technologies are widely used and can comprise mechanical engraving or laser engraving solutions.

Mechanical engraving is the marking process that allows the surface of an object to be modified by, e.g., scratching or burring in order to obtain the shape or the inscription to be engraved. With such devices it is possible to engrave on metals, even of considerable hardness, or on materials whose surface may have been treated in different ways.

Laser engraving, on the other hand, allows, through the release of localized energy, altering the surface of an object so as to create desired shapes or inscriptions on the object itself.

The marking systems of known type are generally combined with control systems that manage the programming and execution of the shapes or inscriptions to be engraved. In particular, such systems generally comprise a marking apparatus provided with a movable head and arranged above a support/work top of the object to be marked.

The apparatus is connected to the control system (e.g. a PC) usually provided with a proprietary word processing software for the data entering (shape or inscription) to be engraved on the object.

In the case of laser solutions, the marking apparatus comprises an illuminator designed to generate a light beam projected towards the support surface to form a light guide which is adapted to indicate the space the data will occupy on the object to be marked. This way, the operator can position the object to be marked on the plane and manually orient it according to the light guide.

After the positioning of the object and once the data has been chosen/inserted in the word processing software, the marking process can be started.

A drawback in the known marking processes is that the object to be marked is positioned solely and exclusively on the base of the light guide visible on the support surface. The light guide usually consists of a closed polygonal line, e.g. a rectangle on the work top, which aids manual setting and orientation of the object to be marked.

As you can guess, the more the object is of a particular shape, the more difficult will be the positioning of the object to be marked.

For example, in the case of a nameplate, the operator will have to push it by hand with small movements until, on sight, he is satisfied with the outcome of the positioning. Furthermore, if the data is to be engraved according to predetermined references, for example precisely parallel or orthogonal to an edge of the object, its positioning will be even more difficult with obvious aesthetic effects on the final marking. Finally, it should be noted that, if the object to be marked is a code (barcode, QR, etc.), a non-compliant engraving could even affect the correct recognition of the object.

### Description of the Invention

The Applicant realised that a visual analysis of the positioning of an object to be marked on the work top is affected by potential human errors due to multiple factors such as, e.g., the lack of consistency of the operator's performance and at the same time the lack of consistency of the analysis and judgement between different operators or even of the same operator at different times of their work shift.

The Applicant thus decided to divide the manual positioning activity, and therefore the arrangement of the object on the work top, from the visual analysis activity, and therefore the check of the correct positioning on the work top.

The Applicant has therefore thought to develop a solution that provides for a check of the final positioning of the object directly on the screen and before the actual marking in order to obtain a more effective, repeatable result which is not affected by human error.

The present invention therefore relates, in a first aspect thereof, to a marking process of an object having structural and functional characteristics such as to meet the above requirements and at the same time to overcome the above mentioned drawbacks with reference to the prior art.

This object is achieved by a marking process of an object according to claim 1. According to a further aspect, the present invention relates to a marking apparatus of an object according to claim 4.

Further embodiments of the present invention are defined in the dependent claims.

### Brief Description of the Drawings

Further characteristics and advantages of the marking process and of the related apparatus made according to the present invention will result more evident from the description below of a preferred example of embodiment, given as an indication and not limited to, with reference to the annexed figures, in which:
- Figures 1 and 2 are schematic views of the laser marking apparatus,
- Figures 3 to 9 are purely indicative schematic views of the phases of the marking process of an object,
- Figures 10a and 10b are schematic views of the apparatus.

### Embodiments of the Invention

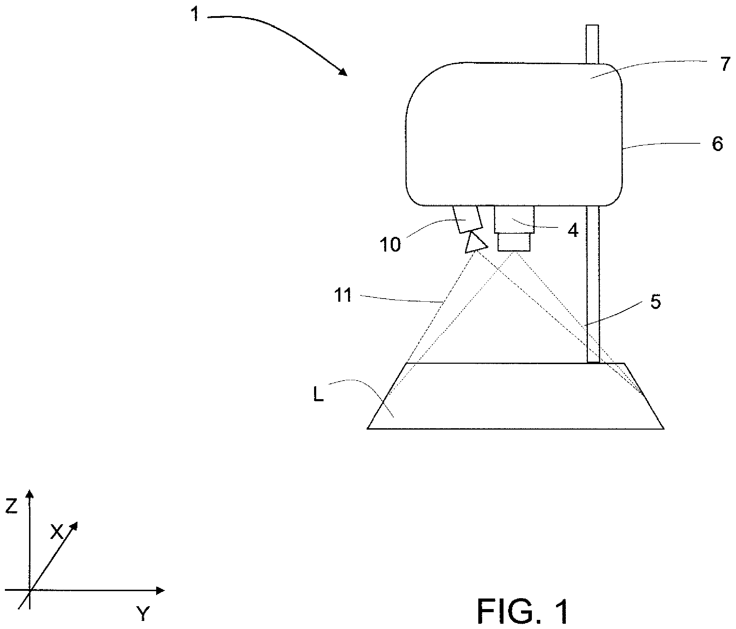

With reference to the example in Figure 1, an apparatus 1 is shown provided with a marking head 4 for marking and/or engraving an object P.

In the remainder of the present description and in the subsequent claims, reference will be made to the apparatus 1 in relation to a laser marking solution.

The apparatus 1 comprises a laser beam generating device 2 suitable for generating a beam of laser light along an optical emission path 5 which, suitably deflected by at least one or more deflection mirrors 3, is sent towards the marking head 4. The marking head 4 may be provided with one or more optical means to focus the laser beam along the optical emission path 5 towards the work top L on which the object P to be marked is positioned.

The generating device 2 and the deflection mirror 3 are preferably housed in an enclosure 6 which moves on the work top L. The marking head 4 is attached to the enclosure 6 to be oriented, in use, towards the work top L. In particular, the enclosure 6 is mounted on a motorised vertical carriage 7 attached to the work top L to allow the marking head 4 to be moved away from and/or approached to the work top L along a vertical direction z.

In addition, by means of appropriate means of movement, e.g. motorized linear guides (not illustrated), associated with the enclosure 6, it is also possible to move the marking head 4 horizontally so that it can be moved with respect to the work top L at will on a three-dimensional system x, y and z.

The deflection mirror 3, or any other deflection mirrors, may also be moved by appropriate movement means, for example, according to the techniques described in the patent IT 1408796 under the name of the Applicant.

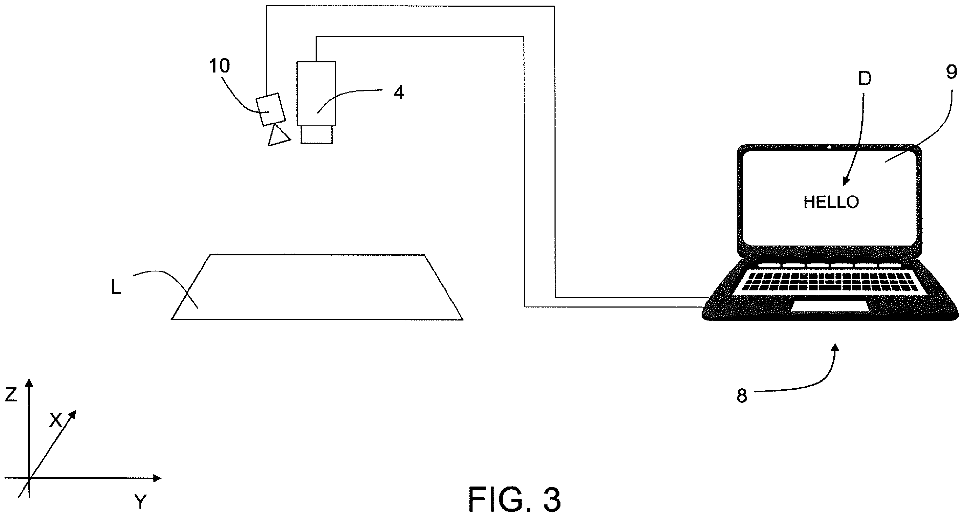

As shown in the example in Figure 3, the apparatus 1 is connected to the processing means 8 (e.g. a pc or a plc) provided with a display 9. The processing means 8 are provided with a proprietary word processing software of the WYSIWYG type for entering the data D (texts and/or images) to be engraved on the object P. Once the data D has been entered on screen, a trigger command can be sent to the apparatus 1 which activates the laser beam in order to replicate the data D on the object P by marking it.

Preferably, the word processing software also allows setting further parameters for the graphic processing of the data to be marked, such as, e.g., magnifying, rotation, font selection, etc., and more generally managing all the on-screen processing operations which are required before sending the trigger command to carry out the actual marking.

Conveniently, the laser beam can also be used to determine the height of the object P by means of techniques known to an expert in the field and not described in detail herein (e.g. by means of triangulation systems, flight time calculation, etc.).

The apparatus 1 is also provided with one or more detecting means 10 adapted to acquire an image of the object to be marked P when the latter is positioned on the work top L. In this case, the detecting means 10 may comprise a camera vision system (e.g. a CCD or CMOS technology type camera) mounted in the enclosure 6 and positioned along an optical receiving path 11 so as to be able to frame the entire surface of the work top L and thus to acquire the image of the object P positioned in any part of the work top L.

It should be noted that the acquired images are analysed by the processing means 8 in order to determine at least one distinctive feature of the image itself that is representative of the object P. The determination of the distinctive feature of the acquired images is carried out by means of predetermined recognition algorithms known to an expert in the sector and not described herein in detail. These recognition algorithms detect, for example, the salient points (or otherwise called "feature points") of the images themselves to determine the type of the object to be marked. According to some embodiments, the determination of the type of the object is carried out through an algorithm of the "SIFT" type (Scale-invariant feature transform).

The camera 10 is preferably arranged on the side of the marking head 4.

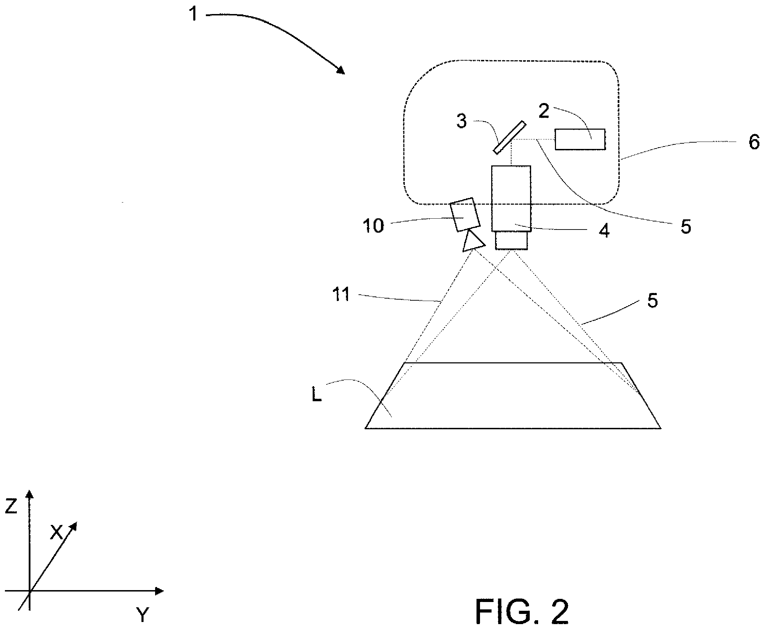

As shown in Figure 2, the orientation of the camera 10 is such that the latter is located along an optical receiving path 11 not coinciding with respect to the optical emission path 5. In particular, the optical receiving path 11 is oriented with respect to the optical emission path 5 by an angle comprised between 10° and 45°, preferably 30°.

Preferably, the three-dimensional image of the acquired object P is transformed by the processing means 8 into a two-dimensional format so that it can be displayed on the display 9 while using the word processing software. In this case, once the object P has been positioned on the work top L, the camera 10 acquires the image of the object P which is processed by the PC 8 so that it can be displayed on the display 9 in a two-dimensional format.

With reference to Figures 3-9, some configurations of the process are illustrated, in particular how the input data D are entered into the word processing software, before proceeding with the acquisition and marking of the object P, and the steps for marking the "HELLO" text on an object P.

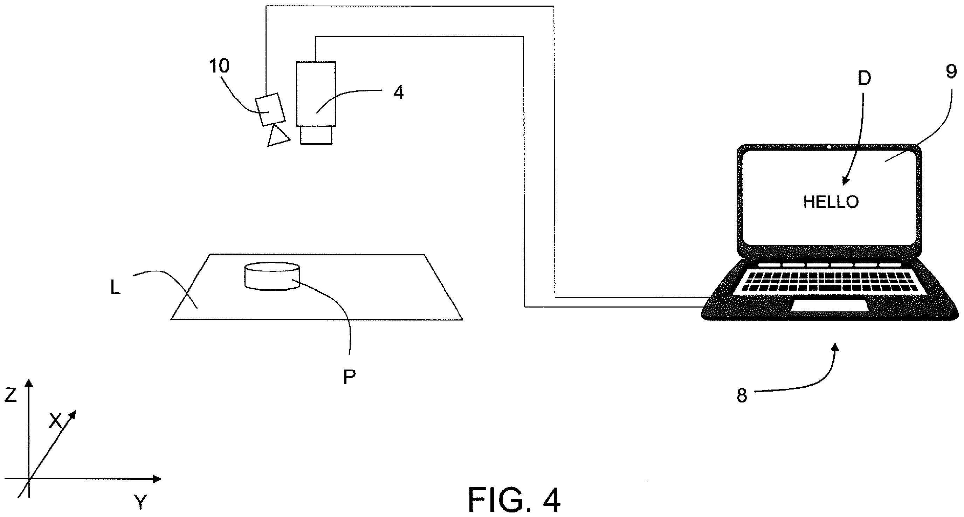

As shown in the example in Figure 3, one operator types in the text "HELLO" using the word processing software mounted on board the PC 8. The text is shown on screen on the display 9 of the PC 8 as it will be subsequently marked on the object. Subsequently, the operator can proceed with the positioning of the object P to be marked on the work top L (Figure 4).

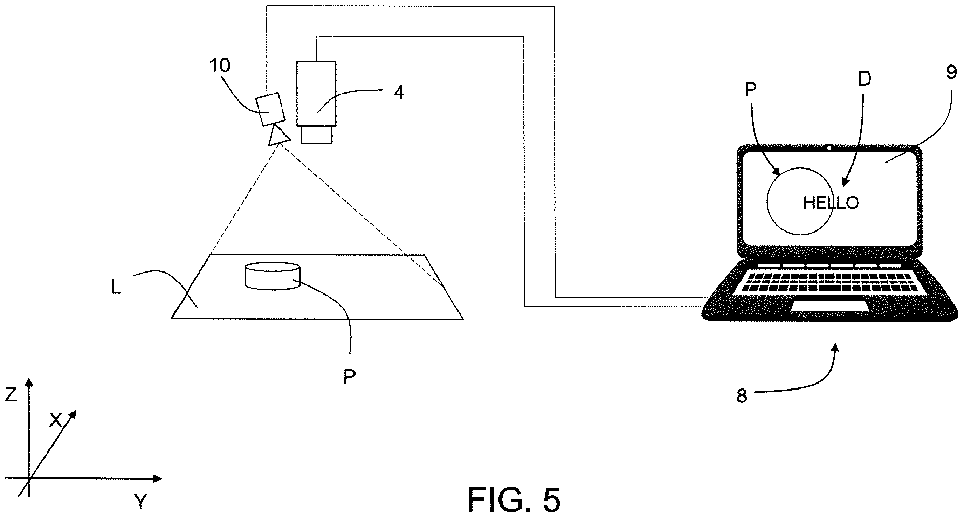

When the camera is switched on (Figure 5), the two-dimensional image of the object P on the display 9 is immediately available thanks to the fact that the acquisition can be carried out continuously, thus allowing a "real-time" display of the object P in the word processing software. Obviously, the detecting means 10 can be configured to take a picture of the work top L for further analysis or on-screen processing.

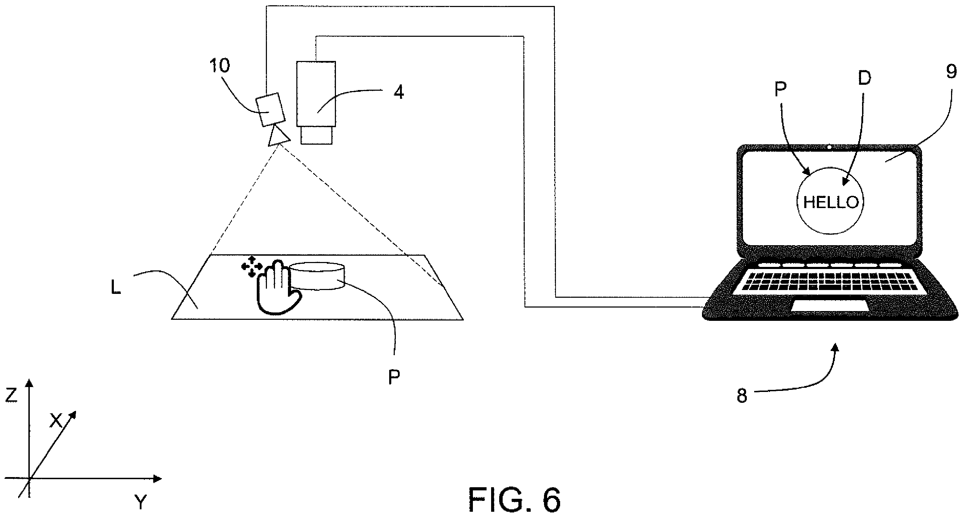

As still visible from Figure 5, the data D is superimposed on screen on the two-dimensional image of the object P to be marked so that if the positioning of the object P is not correct, the operator can visually check and directly on screen any misalignment of the object P with respect to the entered data D. This way not covered by the present invention, the operator can consequently move the object P on the work top L until the desired alignment between the object P and the data D is reached. In Figure 5, it can be seen that the object P is off-centre to the left with respect to the HELLO inscription. In this case, it will be simply enough to displace the object P, for example with one hand, to the right until the HELLO inscription is in the desired position (Figure 6).

In an alternative version not covered by the present invention, the work top L is movable with respect to the marking head 4 and/or with respect to the camera 10. This way, in case of misalignment of the object, it is possible to center the object P automatically without an operator using their hands to move the object P. For this purpose, the apparatus 1 is provided with motorized movement means (not shown) which are linked to the work top L to move it horizontally and vertically.

According to the present invention, it is achieved by displacing the data D directly on screen via software to center it on the object P. For example, in the case of misalignments, incorrect orientations, disproportions, etc., it is then possible to modify the data D on screen via software by means of a plurality of processing/settings which are needed to select the desired alignment between the data D and the object P before sending the trigger command and then make the actual marking.

After having selected the desired predefined alignment and/or orientation between the object P and the data D to be marked, the processing means 8 send a trigger signal to the marking head 4 to move it and align it over the object P to be marked.

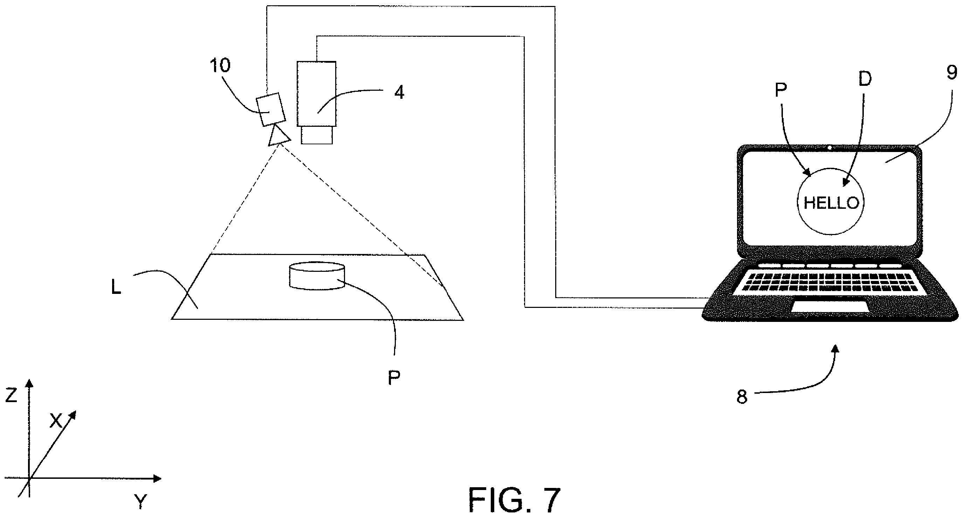

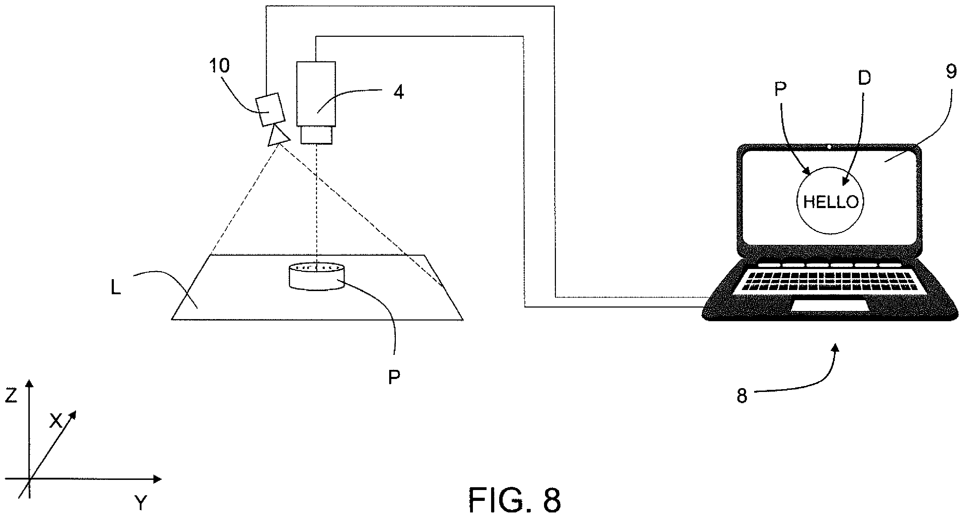

After having reached the desired alignment between the object P and the data D to be engraved, it is possible to start the actual marking which allows the engraving of the data D on the object P in the desired position by means of the laser light beam directed towards the object P (Figures 7 and 8). In yet a further embodiment according to the present invention, it is possible to send a trigger signal to the deflection mirror 3, or any other deflection mirrors, to move it so that the object P to be marked, even if not displaced on the work top L, is still marked. In this configuration, the orientation of the object P to be marked on the work top is not relevant, as all the marking settings can be set by means of the proprietary software installed in the processing means 8.

After the desired alignment or orientation has been reached between the object P and the data D to be engraved, it is possible to start the actual marking which allows the engraving of the data D on the object P in the desired position by means of the laser light beam directed towards the object P (Figures 7 and 8).

It must be specified that the acquisition and processing of the image of the object P allows generating a two-dimensional signal representative of the position of the object P with respect to the data D to be engraved. In particular, the image acquired by the camera 10 is analyzed by the processing means 8, by means of an appropriate dedicated software algorithm, which superimposes the data D on the acquired image of the object P.

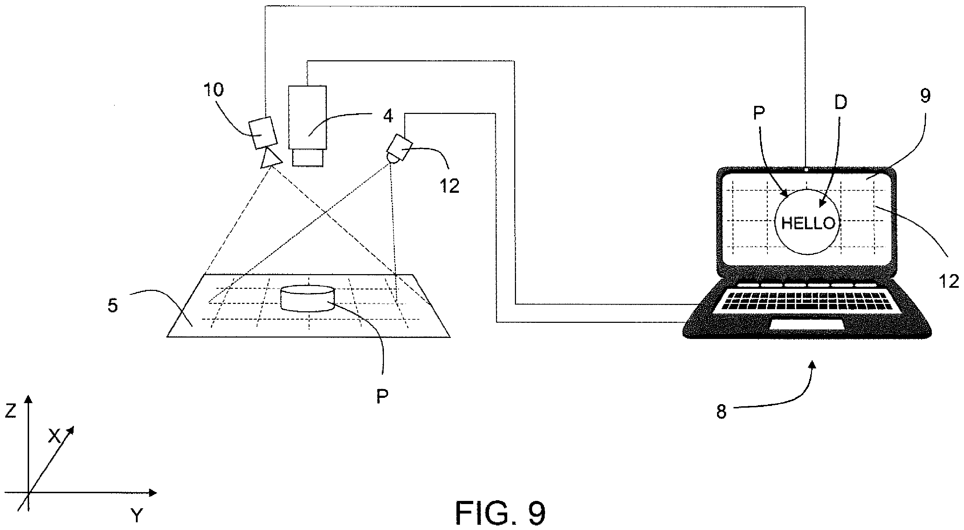

In one embodiment, if the acquired image of the object P contains values that do not correspond to predetermined tolerance values (e.g., unsuitable contrast and/or brightness values), it is possible to have lighting means 12 mounted on the enclosure 6, next to or around the camera 10, to illuminate the object P to be acquired as shown in Figure 9.

Again with reference to the example shown in Figure 9, the lighting means 12 can also be used to send optimised light beams towards the work top L for the generation of a grid intended to facilitate the positioning and orientation of the object P on the top 1. In this case, the camera 10 will not only acquire in real-time the image of the object P to be marked but will also acquire the grid to allow a fine positioning of the object P thanks to the check by the operator, directly on screen, of the position of the object P in relation to the grid.

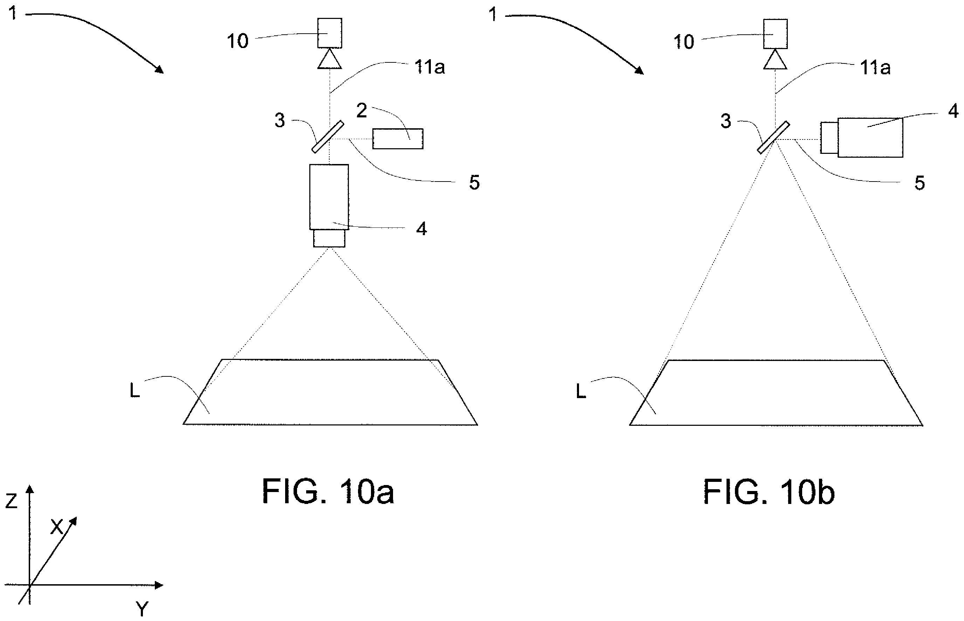

In Figures 10a and 10b, the detecting means 10 are arranged downstream of the deflection mirror 3 and inserted completely into the enclosure 6. For this purpose, the deflection mirror 3 may comprise one or more so-called beam splitters.

In Figure 10a, the detecting means 10 are arranged along a downstream optical receiving path 11a perpendicular to the optical emission path 5 comprised between the generating device 2 and the mirror 3. Downstream of the mirror 3, parallel to the downstream optical receiving path 11a, is arranged the marking head 4 for focusing both the beam and the image to be acquired.

In Figure 10b, the detecting means 10 are arranged along a downstream optical receiving path 11a perpendicular to the optical emission path 5 comprised between the marking head 4 and the mirror 3. In this configuration, the marking head 4 comprises directly therein, the laser beam generating device (not shown) which is deflected by the mirror 3 directly to the work top L.

The configurations shown in Figures 10a and 10b allow the framing area of the detecting means 10 and the emission area of the marking head to be substantially coinciding onto the work top L.

In a further embodiment, the detecting means 10 are configured for the optical recognition of the data D (so-called "OCR"). For this purpose, the processing means 8 are provided with appropriate conversion software associated with the detecting means 10 in order to acquire, e.g., the font of data D already marked in order to make them available for later marking with the same font.

In accordance with one embodiment, the processing means 8 are connected to a server, more specifically a server of the cloud type. Additionally, the apparatus 1 can comprise a machine learning subsystem configured to interact with the processing means 8 in order to model in real time the distinctive features of the acquired images according to the type of objects P identified. In particular, the images are saved in the database and can be analysed by the machine learning subsystem in a predictive way to facilitate the recognition and/or profile of the objects P to be marked.

In a further version, the apparatus 1 can be connected to an open network, e.g. the internet, or to a closed network, e.g. the intranet. This way, several apparatuses 1 placed on the same network can share the information stored in their databases and send it to the server and/or to the machine learning subsystem to improve the performance in determining the distinctive features of the acquired images.

The processing means 8 are conveniently designed to monitor and store all the acquisitions of the object's images in such a way as to process a plurality of statistical information. This information can also be shared in the network to generate a plurality of common performances regarding the image acquisitions or the quality of the markings made. In particular, the performances may comprise, in addition to the statistical data on the types of objects P marked or to be marked, also data on the distinctive features of the objects and on the data D. Substantially, the detecting means 10 and the processing means 8 interact with each other to determine which objects P, for example, have taken more time to be recognized or have generated errors or, again, for qualitative evaluations of the type of marking carried out.

It should be noted that, when marking a very small object P, it is possible to zoom in on the object itself via software in order to capture an enlarged image on screen. This way, the data D to be engraved will be superimposed on the enlarged image of the object P while maintaining unchanged the proportions between the data D and the object P in the subsequent marking.

As can be seen from the present description, it was found that the described invention achieves the intended objects and in particular the fact is underlined that through the marking process and the related apparatus it is possible to check the correct positioning of an object to be marked on the work top in a simple, safe and fast way directly on screen.

Moreover, thanks to the particular acquisition of the images of the objects and marked data, it is possible to process the distinctive features of the objects in order to recognize them, thus improving the determination of the type of product to be marked and also ensuring high performance and effective quality control on the marking of the data.

## Claims

1. Marking process of an object (P) comprising the steps of:
a) providing processing means (8) having a word processing software and a display (9) and operationally connected to a laser apparatus (1) for the marking of an object (P) having a marking head (4) and at least one deflection mirror (3) moved depending on the desired alignment between the object (P) and the data (D) to be marked,
b) entering one data (D) by means of the word processing software suitable for being engraved on an object (P),
c) switching on detecting means (10) which are positioned above a work top (L) of the apparatus (1) to receive the object (P) to be marked,
d) positioning the object (P) to be marked above the work top (L),
e) acquiring an image of the object (P) to be marked and sending it to the word processing software to show it on the display (9),
f) checking via the display (9) whether the data (D) entered is at least partly superimposed on the image of the object (P),
g) starting the marking of the object (P), **characterised by** comprising the further step of:
moving said data (D) via said word processing software depending on a predefined desired alignment between the object (P) and the data (D) to be marked,
moving said at least one deflection mirror (3) and/or said marking head (4) depending on the desired alignment between the object (P) and the data (D) to be marked,
and wherein said checking step f) comprises the step of directly controlling on the display (9) whether the data (D) is at least partly superimposed on the two-dimensional image of the object (P) to be marked.

2. Process according to claim 1, wherein said marking head (4) is moved after that the alignment between said data (D) and said object (P) has been set via said word processing software depending on a predefined desired alignment.

3. Process according to any one of the preceding claims, wherein said step e) of acquiring an image of the object (P) is carried out in a continuous manner and/or via a photography/snapshot.

4. Apparatus (1) for the marking of an object (P), comprising:
- a marking head (4),
- a device (2) capable of generating a laser light beam towards said marking head (4) for the laser engraving of said object (P) to be marked,
- at least one deflection mirror (3) to deflect said laser light beam towards said marking head (4),
- a work top (L) suitable for receiving an object (P) to be marked,
- detecting means (10) mounted above the work top (L) and adapted to acquire at least one image of said object (P) when it is positioned on the work top (L),
- processing means (8) provided with a display (9) and comprising a word processing software for entering a data (D) to be marked on the object (P),
**characterized by** the fact that said processing means (8) are configured to superimpose the image of said object (P) on said data (D) depending on a predefined desired alignment between the object (P) and the data (D) to be marked and by the fact that it comprises movement means in signal communication with said processing means (8) and intended to move said the at least one deflection mirror (3) and/or said marking head (4) depending on the desired alignment between the object (P) and the data (D) to be marked.

5. Apparatus (1) according to claim 4, wherein said processing means (8) comprise a word processing software which are configured to move said data (D) depending on a predefined desired alignment between the object (P) and the data (D) to be marked.

## Patentansprüche

1. Verfahren zur Markierung eines Objekts (P), das die folgenden Schritte umfasst:
a) Bereitstellen von Verarbeitungsmitteln (8) mit einer Textverarbeitungssoftware und einem Display (9), die mit einer Laservorrichtung (1) zur Markierung eines Objekts (P) verbunden sind, die einen Markierungskopf (4) und mindestens einen Umlenkspiegel (3) aufweist, der in Abhängigkeit von der gewünschten Ausrichtung zwischen dem Objekt (P) und den zu markierenden Daten (D) bewegt wird,
b) Eingeben von Daten (D) mittels der Textverarbeitungssoftware, die geeignet sind, auf ein Objekt (P) graviert zu werden,
c) Einschalten von Erfassungsmitteln (10), die oberhalb einer Arbeitsfläche (L) der Vorrichtung (1) angeordnet sind, die dazu dient, das zu markierende Objekt (P) aufzunehmen,
d) Positionieren des zu markierenden Objekts (P) oberhalb der Arbeitsfläche (L),
e) Erfassen eines Bildes des zu markierenden Objekts (P) und Senden dieses Bildes an die Textverarbeitungssoftware, um es auf dem Display (9) anzuzeigen,
f) Überprüfen über das Display (9), ob die eingegebenen Daten (D) zumindest teilweise das Bild des Objekts (P) überlagern,
g) Starten der Markierung des Objekts (P),
**dadurch gekennzeichnet,**
**dass** es den folgenden weiteren Schritt umfasst:
Bewegen der Daten (D) über die Textverarbeitungssoftware in Abhängigkeit von einer vordefinierten gewünschten Ausrichtung zwischen dem Objekt (P) und den zu markierenden Daten (D),
Bewegen des mindestens einen Umlenkspiegels (3) und/oder des Markierungskopfes (4) in Abhängigkeit von der gewünschten Ausrichtung zwischen dem Objekt (P) und den zu markierenden Daten (D),
und wobei der Prüfschritt f) den Schritt der direkten Überprüfung auf dem Display (9) umfasst, ob die Daten (D) zumindest teilweise dem zweidimensionalen Bild des zu markierenden Objekts (P) überlagert sind.

2. Verfahren nach Anspruch 1, wobei der Markierungskopf (4) bewegt wird, nachdem die Ausrichtung zwischen den Daten (D) und dem Objekt (P) über die Textverarbeitungssoftware in Abhängigkeit von einer vordefinierten gewünschten Ausrichtung eingestellt wurde.

3. Verfahren nach einem der vorhergehenden Ansprüche, wobei der Schritt e) der Erfassung eines Bildes des Objekts (P) kontinuierlich und/oder durch eine Fotografie/einen Schnappschuss durchgeführt wird.

4. Vorrichtung (1) zur Markierung eines Objekts (P), umfassend:
- einen Markierungskopf (4),
- ein Gerät (2), das in der Lage ist, einen Laserlichtstrahl in Richtung des Markierungskopfes (4) für die Lasergravur des zu markierenden Objekts (P) zu erzeugen,
- mindestens einen Umlenkspiegel (3), um den Laserlichtstrahl in Richtung des Markierungskopfes (4) abzulenken,
- eine Arbeitsfläche (L), die geeignet ist, ein zu markierendes Objekt (P) aufzunehmen,
- Erfassungsmittel (10), die oberhalb der Arbeitsfläche (L) angebracht und ausgebildet sind, um mindestens ein Bild des Objekts (P) zu erfassen, wenn es auf der Arbeitsfläche (L) positioniert ist,
- Verarbeitungsmittel (8), die mit einem Display (9) versehen sind und eine Textverarbeitungssoftware zur Eingabe von auf dem Objekt (P) zu markierenden Daten (D) aufweisen,
**dadurch gekennzeichnet,**
**dass** die Verarbeitungsmittel (8) so ausgebildet sind, dass sie das Bild des Objekts (P) den Daten (D) in Abhängigkeit von einer vordefinierten gewünschten Ausrichtung zwischen dem Objekt (P) und den zu markierenden Daten (D) überlagern, und dadurch, dass sie Bewegungsmittel aufweist, die in Signalverbindung mit den Verarbeitungsmitteln (8) stehen und dazu bestimmt sind, den mindestens einen Ablenkspiegel (3) und/oder den Markierungskopf (4) in Abhängigkeit von der gewünschten Ausrichtung zwischen dem Objekt (P) und den zu markierenden Daten (D) zu bewegen.

5. Vorrichtung (1) nach Anspruch 4, wobei die Verarbeitungsmittel (8) eine Textverarbeitungssoftware aufweisen, die dazu ausgebildet ist, die Daten (D) in Abhängigkeit von einer vordefinierten gewünschten Ausrichtung zwischen dem Objekt (P) und den zu markierenden Daten (D) zu bewegen.

## Revendications

1. - Procédé de marquage d'un objet (P) comprenant les étapes suivantes :
a) fournir des moyens de traitement (8) ayant un logiciel de traitement de texte et un dispositif d'affichage (9) et connectés de manière fonctionnelle à un appareil laser (1) pour le marquage d'un objet (P) ayant une tête de marquage (4) et au moins un miroir de déviation (3) déplacé en fonction de l'alignement souhaité entre l'objet (P) et la donnée (D) à marquer,
b) entrer des données (D), au moyen du logiciel de traitement de texte, apte à être gravées sur un objet (P),
c) mettre en marche des moyens de détection (10) qui sont positionnés au-dessus d'un plan de travail (L) de l'appareil (1) pour recevoir l'objet (P) à marquer,
d) positionner l'objet (P) à marquer au-dessus du plan de travail (L),
e) acquérir une image de l'objet (P) à marquer et l'envoyer au logiciel de traitement de texte pour l'afficher sur le dispositif d'affichage (9),
f) vérifier par l'intermédiaire du dispositif d'affichage (9) si les données (D) entrées sont ou non au moins partiellement superposées sur l'image de l'objet (P),
g) commencer le marquage de l'objet (P),
**caractérisé par le fait qu'**il comprend l'étape supplémentaire suivante :
déplacer lesdites données (D) par l'intermédiaire dudit logiciel de traitement de texte en fonction d'un alignement souhaité prédéfini entre l'objet (P) et les données (D) à marquer,
déplacer ledit au moins un miroir de déviation (3) et/ou ladite tête de marquage (4) en fonction de l'alignement souhaité entre l'objet (P) et les données (D) à marquer, et
ladite étape de vérification f) comprenant l'étape consistant à contrôler directement sur le dispositif d'affichage (9) si les données (D) sont ou non au moins partiellement superposées sur l'image bidimensionnelle de l'objet (P) à marquer.

2. - Procédé selon la revendication 1, dans lequel ladite tête de marquage (4) est déplacée une fois que l'alignement entre lesdites données (D) et ledit objet (P) a été défini par l'intermédiaire dudit logiciel de traitement de texte en fonction d'un alignement souhaité prédéfini.

3. - Procédé selon l'une quelconque des revendications précédentes, dans lequel ladite étape e) consistant à acquérir une image de l'objet (P) est réalisée de manière continue et/ou par l'intermédiaire d'une photographie/instantané d'écran.

4. - Appareil (1) pour le marquage d'un objet (P), comprenant :
- une tête de marquage (4),
- un dispositif (2) apte à générer un faisceau de lumière laser vers ladite tête de marquage (4) pour la gravure au laser dudit objet (P) à marquer,
- au moins un miroir de déviation (3) pour dévier ledit faisceau de lumière laser vers ladite tête de marquage (4),
- un plan de travail (L) apte à recevoir un objet (P) à marquer,
- des moyens de détection (10) montés au-dessus du plan de travail (L) et conçus pour acquérir au moins une image dudit objet (P) lorsqu'il est positionné sur le plan de travail (L),
- des moyens de traitement (8) comportant un dispositif d'affichage (9) et comprenant un logiciel de traitement de texte pour entrer des données (D) à marquer sur l'objet (P), **caractérisé par le fait que** lesdits moyens de traitement (8) sont configurés pour superposer l'image dudit objet (P) sur lesdites données (D) en fonction d'un alignement souhaité prédéfini entre l'objet (P) et les données (D) à marquer, et **par le fait qu'**il comprend des moyens de déplacement en communication de signal avec lesdits moyens de traitement (8) et conçus pour déplacer ledit au moins un miroir de déviation (3) et/ou ladite tête de marquage (4) en fonction de l'alignement souhaité entre l'objet (P) et les données (D) à marquer.

5. - Appareil (1) selon la revendication 4, dans lequel lesdits moyens de traitement (8) comprennent un logiciel de traitement de texte, qui sont configurés pour déplacer lesdites données (D) en fonction d'un alignement souhaité prédéfini entre l'objet (P) et les données (D) à marquer.
